# EUROPEAN PATENT APPLICATION

(11) **EP 4 773 380 A1**
(43) Date of publication of application: **08.07.2026**
(21) Application number: 24859466.5
(22) Date of filing: 14.08.2024
(51) Int. Cl.: H01M 50/293, H01M 10/613, H01M 10/655, H01M 50/204, H01M 50/211

(54) **BATTERY MODULE**

(30) Priority: 31.08.2023 JP 2023141440
(71) Applicant: AESC Japan Ltd., Yokohama-shi, Kanagawa 220-0012 (JP)
(72) Inventor: OKAZUMI, Ryoma, Zama-shi, Kanagawa 252-0012 (JP); TAKADA, Hideaki, Zama-shi, Kanagawa 252-0012 (JP); JINBO, Hideto, Zama-shi, Kanagawa 252-0012 (JP); YAMADA, Shinya, Zama-shi, Kanagawa 252-0012 (JP); FU, Yongliang, Zama-shi, Kanagawa 252-0012 (JP)
(74) Representative: Mathys & Squire
(86) International application number: PCT/JP2024/028968
(87) International publication number: WO 2025/047430

(57) **Abstract**

A battery module (100) includes a battery cell (110), a housing (200) that accommodates the battery cell (110), an adhesive (300) that is at least partially positioned between the battery module (100) and the housing (200), and a first extending portion (264) and an elastic material (400) that dam at least a part of the adhesive (300).

## Description

### TECHNICAL FIELD

The present invention relates to a battery module.

### BACKGROUND ART

In recent years, various battery modules have been developed. The battery module includes a plurality of battery cells stacked in a predetermined direction and a housing that accommodates the plurality of battery cells.

Patent Document 1 discloses a battery module. The battery module includes a thermally conductive adhesive provided on both an upper surface side and a lower surface side of the plurality of battery cells.

Patent Document 2 discloses a battery module. In the battery module, a frame-shaped protrusion is provided on a main surface of the battery cell. A filler is applied to the main surface of the battery cell in the frame-shaped protrusion.

### RELATED DOCUMENT

### PATENT DOCUMENT

Patent Document 1: PCT Japanese Translation Patent Publication No. 2020-523749
Patent Document 2: Pamphlet of International Publication No. WO 2019/187043

### SUMMARY OF THE INVENTION

### TECHNICAL PROBLEM

An adhesive such as a thermally conductive adhesive may be at least partially positioned between the battery cell and the housing. The adhesive may be required to be positioned with high accuracy.

An example of the object of the present invention is to position the adhesive with high accuracy. Other objects of the present invention will become apparent from the description of the present specification.

### SOLUTION TO PROBLEM

One aspect of the present invention is as follows.
1. A battery module including
   a battery cell,
   a housing that accommodates the battery cell,
   an adhesive that is at least partially positioned between the battery cell and the housing, and
   a structure that dams at least a part of the adhesive.
2. The battery module according to 1., in which the structure includes an elastic material.
3. The battery module according to 2., in which the elastic material is at least partially positioned between the battery cell and the housing.
4. The battery module according to 2. or 3., in which when the elastic material is compressed, a stress of the elastic material is equal to or greater than a pressure exerted by the adhesive before curing to the elastic material.
5. The battery module according to any one of 1. to 4.,
   in which predetermined portions of the housing are joined to each other, and
   the structure is at least partially positioned between the predetermined portions and the adhesive.
6. The battery module according to any one of 1. to 5., in which the adhesive has thermal conductivity.

### ADVANTAGEOUS EFFECTS OF INVENTION

According to the aspect of the present invention, the adhesive can be positioned with high accuracy.

### BRIEF DESCRIPTION OF THE DRAWINGS

[FIG. 1] An exploded top perspective view of a battery module according to an embodiment.
[FIG. 2] A perspective view of one battery cell, a sixth plate, an adhesive, and a pair of elastic materials according to the embodiment.
[FIG. 3] A graph showing a relationship between a compression ratio of the elastic material and a stress of the elastic material.

### DESCRIPTION OF EMBODIMENTS

Hereinafter, an embodiment of the present invention will be described with reference to the drawings. In all drawings, the same constituent elements are denoted by the same reference signs, and detailed description thereof will not be repeated.

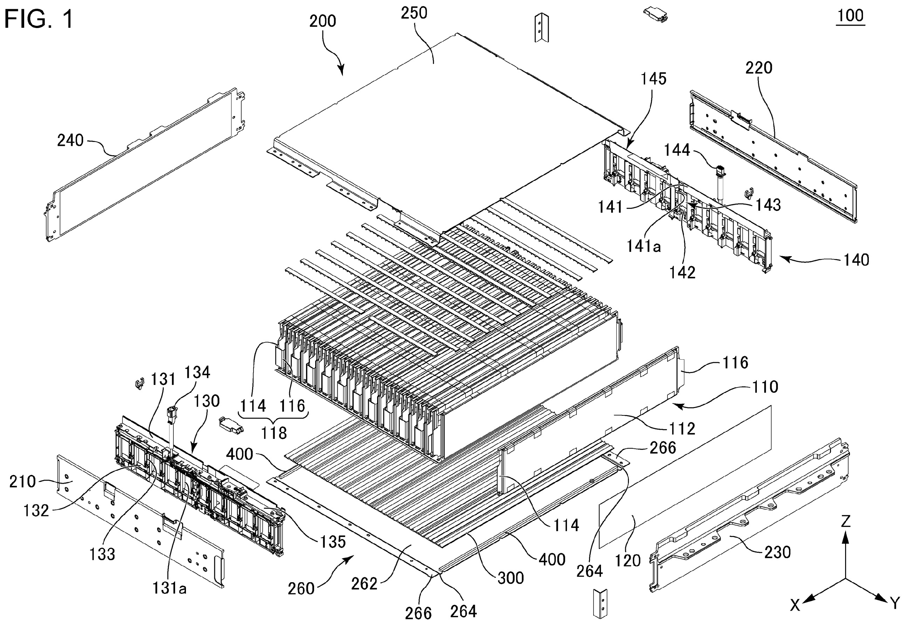

FIG. 1 is an exploded top perspective view of a battery module 100 according to an embodiment.

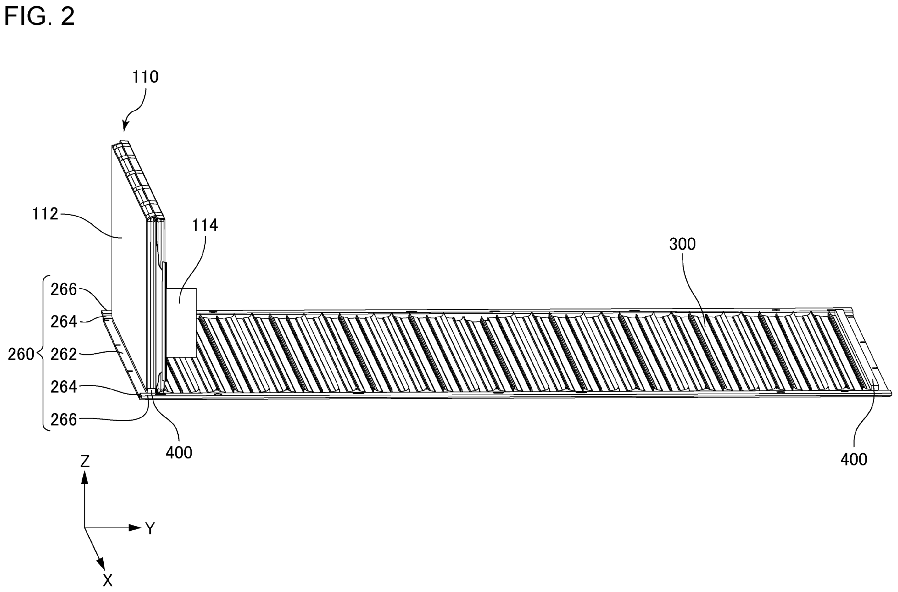

X direction, Y direction, and Z direction are shown in FIGS. 1 and 2 described below for description. The X direction indicates a front-rear direction of the battery module 100. The Y direction is orthogonal to the X direction. The Y direction indicates a left-right direction of the battery module 100. The Z direction is orthogonal to both the X direction and the Y direction. The Z direction indicates an up-down direction of the battery module 100. The arrow indicating the X direction, indicating the Y direction, and the arrow indicating the Z direction indicate a front direction, a left direction, and an up direction of the battery module 100, respectively. Hereinafter, a tip end side of an arrow indicating the X direction will be referred to as a +X side, and an opposite side of the tip end of the arrow indicating the X direction will be referred to as a -X side, a tip end side of an arrow indicating the Y direction will be referred to as a +Y side, and an opposite side of the tip end of the arrow indicating the Y direction will be referred to as a -Y side, a tip end side of an arrow indicating the Z direction will be referred to as a +Z side, and an opposite side of the tip end of the arrow indicating the Z direction will be referred to as a -Z side. A relationship between the X direction, the Y direction, and the Z direction and a front-rear direction, a left-right direction, and an up-down direction of the battery module 100 is not limited to the above example.

The battery module 100 includes a plurality of battery cells 110, a plurality of compression pads 120, a first voltage detection device 130, a second voltage detection device 140, a housing 200, an adhesive 300, and a pair of elastic materials 400.

The plurality of battery cells 110 and the plurality of compression pads 120 are alternately stacked in the Y direction. Each compression pad 120 is disposed between the battery cells 110 adjacent to each other in the Y direction and on both sides of the plurality of battery cells 110 in the Y direction. Hereinafter, the plurality of battery cells 110 and the plurality of compression pads 120 alternately stacked in the Y direction will be referred to as a stack of the battery cells 110, as necessary. The dimension of each battery cell 110 in the X direction is a dimension of each battery cell 110 in the longitudinal direction. The dimension of each battery cell 110 in the Z direction is a dimension of each battery cell 110 in the lateral direction. The dimension of each battery cell 110 in the Y direction is a dimension of each battery cell 110 in the thickness direction. The shape of each battery cell 110 is not limited to this example.

Each battery cell 110 includes a battery element (not shown), an exterior material 112, a positive electrode tab 114, and a negative electrode tab 116. In an example, the battery element includes a plurality of positive electrodes and a plurality of negative electrodes (not shown) that are alternately stacked in the Y direction, and a separator (not shown) that is located between the positive electrode and the negative electrode adjacent to each other in the Y direction. The exterior material 112 seals a battery element and an electrolytic solution (not shown). The positive electrode tab 114 is electrically connected to the positive electrode of the battery element. The positive electrode tab 114 is drawn out from one of two sides the exterior material 112 in the X direction. The negative electrode tab 116 is electrically connected to the negative electrode of the battery element. The negative electrode tab 116 is drawn out from the other side of the exterior material 112 in the X direction. However, the structure of each battery cell 110 is not limited to this example.

Each battery cell 110 may be a solid state battery. In the solid state battery, a solid electrolyte layer is provided in a portion corresponding to the separator. The solid state battery does not include the electrolytic solution. Hereinafter, each battery cell 110 will be described as a battery cell including the electrolytic solution unless otherwise specified.

The plurality of battery cells 110 is electrically connected in a combination of series and parallel. Specifically, a cell group including at least two battery cells 110 connected in parallel and adjacent to each other in the Y direction is stacked and connected in series in the Y direction. On the +X side of the stack of the battery cells 110, a tab group 118 including a positive electrode tab 114 drawn out from the battery cell 110 of one cell group connected in parallel and a negative electrode tab 116 drawn out from the battery cell 110 of another cell group connected in parallel is positioned, and the positive electrode tab 114 and the negative electrode tab 116 are electrically connected to each other. The positive electrode tab 114 and the negative electrode tab 116 in the tab group 118 are joined to each other, for example, by laser welding. The tab group 118 is also positioned on the -X side of the stack of the battery cells 110. Therefore, the plurality of cell groups is connected in series from the cell group positioned on one end side of the stack of the battery cells 110 in the Y direction to the cell group positioned on the other end side of the stack of the battery cells 110 in the Y direction. Hereinafter, the tab group 118 positioned on the +X side of the stack of the battery cells 110 will be referred to as a +X side tab group 118, and the tab group 118 positioned on the -X side of the stack of the battery cells 110 will be referred to as a - X side tab group 118 as necessary.

The electrical connection of the plurality of battery cells 110 is not limited to the above-described example. For example, a single battery cell 110 may be connected in series to form the stack of the battery cells 110.

The first voltage detection device 130 detects the voltage of the plurality of +X side tab groups 118. The first voltage detection device 130 includes a first protector 131, a plurality of first voltage detection terminals 132, a plurality of first voltage detection lines 133, a first connector 134, and a first bus bar 135.

The first protector 131 covers the +X side portion of the stack of the battery cells 110. The first protector 131 is, for example, an insulator such as a resin. The first protector 131 defines a plurality of first openings 131a. Each of the plurality of +X side tab groups 118 is exposed to the +X side through each of the plurality of first openings 131a.

Each of the plurality of first voltage detection terminals 132 is positioned on the +X side of each of the plurality of +X side tab groups 118. Each first voltage detection terminal 132 is, for example, a conductive member such as a metal. The -X side surface of each first voltage detection terminal 132 and the +X side surface of each +X side tab group 118 are joined to each other by, for example, a joining method such as laser welding. Therefore, each first voltage detection terminal 132 and each +X side tab group 118 are electrically connected to each other. Therefore, the first voltage detection device 130 can detect the voltage of each +X side tab group 118 by each first voltage detection terminal 132. The plurality of first voltage detection terminals 132 is integrally held by the first protector 131. Therefore, by installing the first protector 131 at an appropriate position with respect to the stack of the battery cells 110, each of the plurality of first voltage detection terminals 132 can be disposed at an appropriate position with respect to each of the plurality of +X side tab groups 118.

One end of each first voltage detection line 133 and each first voltage detection terminal 132 are electrically connected to each other. The other end of each first voltage detection line 133 and the first connector 134 are electrically connected to each other. Therefore, the plurality of first voltage detection terminals 132 and the first connector 134 are electrically connected to each other through the plurality of first voltage detection lines 133. Each first voltage detection line 133 is routed through the first protector 131 between one end of each first voltage detection line 133 and the other end of each first voltage detection line 133.

The first bus bar 135 is disposed at the +Y side end portion of the first protector 131. The first bus bar 135 is electrically connected to the positive electrode tab 114 drawn out from the battery cell 110 of the cell group positioned at the +Y side end part of the stack of the battery cells 110 to the +X side. The first bus bar 135 functions as an external terminal for electrically connecting the battery module 100 to another external device such as another battery module.

The second voltage detection device 140 detects the voltage of the plurality of -X side tab groups 118. The second voltage detection device 140 includes a second protector 141, a plurality of second voltage detection terminals 142, a plurality of second voltage detection lines 143, a second connector 144, and a second bus bar 145.

The second protector 141 covers the -X side portion of the stack of the battery cells 110. The second protector 141 is, for example, an insulator such as a resin. The second protector 141 defines a plurality of second openings 141a. Each of the plurality of -X side tab groups 118 is exposed to the -X side through each of the plurality of second openings 141a.

Each of the plurality of second voltage detection terminals 142 is positioned on the -X side of each of the plurality of -X side tab groups 118. Each second voltage detection terminal 142 is, for example, a conductive member such as a metal. The +X side surface of each second voltage detection terminal 142 and the -X side surface of each -X side tab group 118 are joined to each other by, for example, a joining method such as laser welding. Therefore, each second voltage detection terminal 142 and each -X side tab group 118 are electrically connected to each other. Therefore, the second voltage detection device 140 can detect the voltage of each -X side tab group 118 by each second voltage detection terminal 142. The plurality of second voltage detection terminals 142 is integrally held by the second protector 141. Therefore, by installing the second protector 141 at an appropriate position with respect to the stack of the battery cells 110, each of the plurality of second voltage detection terminals 142 can be disposed at an appropriate position with respect to each of the plurality of -X side tab groups 118.

One end of each second voltage detection line 143 and each second voltage detection terminal 142 are electrically connected to each other. The other end of each second voltage detection line 143 and the second connector 144 are electrically connected to each other. Therefore, the plurality of second voltage detection terminals 142 and the second connector 144 are electrically connected to each other through the plurality of second voltage detection lines 143. Each second voltage detection line 143 is routed through the second protector 141 between one end of each second voltage detection line 143 and the other end of each second voltage detection line 143.

The second bus bar 145 is disposed at the -Y side end portion of the second protector 141. The second bus bar 145 is electrically connected to the negative electrode tab 116 drawn out from the battery cell 110 of the cell group positioned at the -Y side end part of the stack of the battery cells 110 to the -X side. The second bus bar 145 functions as an external terminal for electrically connecting the battery module 100 to another external device such as another battery module.

In the example shown in FIG. 1, the positive electrode tab 114 of the terminal of the plurality of cell groups connected in series is drawn out from the battery cell 110 of the cell group positioned on the +Y side end portion of the stack of the battery cells 110 to the +X side, and the negative electrode tab 116 of the terminal of the plurality of cell groups connected in series is drawn out from the battery cell 110 of the cell group positioned on the -Y side end portion of the stack of the battery cells 110 to the -X side. Therefore, the first bus bar 135 is disposed on the +X side and the +Y side with respect to the stack of the battery cells 110, and the second bus bar 145 is disposed on the -X side and the -Y side with respect to the stack of the battery cells 110. However, the disposition of the positive electrode tab 114 and the negative electrode tab 116 of the terminal of the plurality of cell groups connected in series may be different depending on the number of the battery cells 110 included in the stack of the battery cells 110. For example, the positive electrode tab 114 of the terminal of the plurality of cell groups connected in series may be drawn out from the battery cell 110 of the cell group positioned on the on +Y side end portion of the stack of the battery cells 110 to the +X side, and the negative electrode tab 116 of the terminal of the plurality of cell groups connected in series may be drawn out from the battery cell 110 of the cell group positioned on the -Y side end portion of the stack of the battery cells 110 to the +X side. In this case, the first bus bar 135 is disposed on the +X side and the +Y side with respect to the stack of the battery cells 110, and the second bus bar 145 is disposed on the -X side and the -Y side with respect to the stack of the battery cells 110.

The housing 200 includes a first plate 210, a second plate 220, a third plate 230, a fourth plate 240, a fifth plate 250, and a sixth plate 260.

The first plate 210 covers the +X side portion of the stack of the battery cells 110 and the +X side portion of the first voltage detection device 130. The second plate 220 covers the - X side portion of the stack of the battery cells 110 and the -X side portion of the second voltage detection device 140. The third plate 230 covers the +Y side portion of the stack of the battery cells 110. The fourth plate 240 covers the -Y side portion of the stack of the battery cells 110. The fifth plate 250 covers the +Z side portion of the stack of the battery cells 110. The sixth plate 260 covers the -Z side portion of the stack of the battery cells 110.

FIG. 2 is a perspective view of one battery cell 110, the sixth plate 260, the adhesive 300, and the pair of elastic materials 400 according to the embodiment. FIG. 2 shows one battery cell 110 positioned at the -Y side end of the stack of the battery cells 110.

The sixth plate 260, the adhesive 300, and the pair of elastic materials 400 will be described with reference to FIG. 2 and, as necessary, with reference to FIG. 1.

The sixth plate 260 is, for example, a metal plate such as an aluminum plate. The sixth plate 260 includes a plate portion 262, a pair of first extending portions 264, and a pair of second extending portions 266. From the Z direction, the plate portion 262 has a substantially square plate shape or a substantially rectangular plate shape having a pair of sides parallel to the X direction and another pair of sides parallel to the Y direction. The pair of first extending portions 264 is bent toward the +Z side with respect to both end portions of the plate portion 262 in the X direction. The pair of first extending portions 264 extend in the Y direction. The pair of second extending portions 266 is bent toward the outer sides of the plate portion 262 in the X direction with respect to the +Z side end portions of the pair of first extending portions 264. The pair of second extending portions 266 extend in the Y direction. From the Y direction, the plate portion 262 and the pair of first extending portions 264 define a recessed shape that is open toward the +Z side.

The adhesive 300 has thermal conductivity. The adhesive 300 is, for example, a thermally conductive adhesive such as a silicone adhesive or a urethane adhesive. The adhesive 300 is at least partially positioned between the -Z side surface of the stack of the battery cells 110 and the +Z side surface of the plate portion 262 in the Z direction. Therefore, heat generated from the stack of the battery cells 110 can be dissipated to the plate portion 262 through the adhesive 300. However, the adhesive 300 may not have thermal conductivity.

Each elastic material 400 is a material that is elastically deformable. In one example, each elastic material 400 is a porous material such as a sponge. When the elastic material 400 is a porous material, a void is present on at least a part of a surface and an inside of the elastic material 400. The elastic material 400 may be rubber. In the embodiment, each elastic material 400 in a non-compressed state has a substantially square columnar shape extending in the X direction. However, a shape of the elastic material 400 in the non-compressed state is not limited to the shape according to the embodiment.

The pair of first extending portions 264 is positioned on both sides of the adhesive 300 in the X direction. Therefore, from the Z direction, the pair of first extending portions 264 are at least partially positioned around the adhesive 300. Therefore, the pair of first extending portions 264 has a structure that dams both end portions of the adhesive 300 in the X direction.

The pair of elastic materials 400 is positioned on both sides of the adhesive 300 in the Y direction. Therefore, from the Z direction, each elastic material 400 is at least partially positioned around the adhesive 300. Therefore, the pair of elastic materials 400 has a structure that dams both end portions of the adhesive 300 in the Y direction.

Hereinafter, the battery cell 110 positioned at the -Y side end of the stack of the battery cells 110 will be referred to as a -Y side battery cell 110, and the battery cell 110 positioned at the end of the stack of the battery cells 110 on the +Y side will be referred to as a +Y side battery cell 110, as necessary. Hereinafter, a first extending portion 264 positioned on the -X side among the pair of first extending portions 264 will be referred to as a -X side first extending portion 264, and a first extending portion 264 positioned on the +X side among the pair of first extending portions 264 will be referred to as a +X side first extending portion 264, as necessary. Hereinafter, a second extending portion 266 positioned on the -X side among the pair of second extending portions 266 will be referred to as a - X side second extending portion 266, and a second extending portion 266 positioned on the +X side among the pair of second extending portions 266 will be referred to as a +X side second extending portion 266, as necessary. Hereinafter, an elastic material 400 positioned on the -Y side among the pair of elastic materials 400 will be referred to as a -Y side elastic material 400, and an elastic material 400 positioned on the +Y side among the pair of elastic materials 400 will be referred to as a +Y side elastic material 400, as necessary.

The adhesive 300 is formed by curing an adhesive applied to the +Z side of the plate portion 262 in a liquid state or a gel state. Hereinafter, the adhesive in a liquid state or a gel state before curing of the adhesive 300 will be referred to as an uncured adhesive. The uncured adhesive is formed into the adhesive 300 in the following manner. First, the uncured adhesive is applied to the +Z side of the plate portion 262 between the pair of first extending portions 264 in the X direction and between the pair of elastic materials 400 in the Y direction. Next, the stack of the battery cells 110 is disposed on the +Z side of the plate portion 262 through the uncured adhesive and the pair of elastic materials 400. The uncured adhesive spreads in a direction perpendicular to the Z direction due to the load of the stack of the battery cells 110 in the Z direction. Even if the uncured adhesive spreads to the +X side and the -X side, the X direction opposite end portions of the uncured adhesive can be dammed by the pair of first extending portions 264. Even if the uncured adhesive spreads to the +Y side and the -Y side, the Y direction opposite end portions of the uncured adhesive can be dammed by the pair of elastic materials 400. Therefore, the uncured adhesive, that is, the adhesive 300 can be positioned with high accuracy as compared with when the pair of first extending portions 264 and the pair of elastic materials 400 are not provided. Next, the uncured adhesive is cured to form the adhesive 300. A method of curing the uncured adhesive is not particularly limited, and is, for example, drying, heating, or light irradiation.

The surface of the adhesive 300 on the +Z side shown in FIGS. 1 and 2 is formed with unevenness. The unevenness of the surface of the adhesive 300 on the +Z side is formed by transfer of the -Z side surface of the stack of the battery cells 110 to the +Z side surface of the uncured adhesive due to the load of the stack of the battery cells 110 on the uncured adhesive.

In the embodiment, after the adhesive 300 is formed on the +Z side of the plate portion 262, the -Z side end portion of the first plate 210 and the +Z side surface of the +X side second extending portion 266 are joined to each other by a joining method such as laser welding, and the -Z side end portion of the second plate 220 and the +Z side surface of the -X side second extending portion 266 are joined to each other by a joining method such as laser welding. The +X side first extending portion 264 is at least partially positioned between the +Z side surface of the +X side second extending portion 266 and the +X side end portion of the adhesive 300. As a result, the +X side end portion of the adhesive 300 can be prevented from reaching the +Z side surface of the +X side second extending portion 266. Therefore, joining defect, such as welding defect, between the - Z side end portion of the first plate 210 and the +Z side surface of the +X side second extending portion 266 caused by the presence of at least a part of the adhesive 300 on the +Z side surface of the +X side second extending portion 266 can be avoided. Similarly to the +X side first extending portion 264, the -X side first extending portion 264 is at least partially positioned between the +Z side surface of the -X side second extending portion 266 and the -X side end portion of the adhesive 300. Therefore, joining defect between the -Z side end portion of the second plate 220 and the +Z side surface of the - X side second extending portion 266 caused by the presence of at least a part of the adhesive 300 on the +Z side surface of the - X side second extending portion 266 can be avoided.

In the embodiment, after the adhesive 300 is formed on the +Z side surface side of the plate portion 262, the -Z side end portion of the third plate 230 and the +Z side surface of the +Y side end portion of the plate portion 262 are joined to each other by a joining method such as laser welding, and the -Z side end portion of the fourth plate 240 and the +Z side surface of the -Y side end portion of the plate portion 262 are joined to each other by a joining method such as laser welding. The +Y side elastic material 400 is at least partially positioned between the +Z side surface of the +Y side end portion of the plate portion 262 and the +Y side end portion of the adhesive 300. As a result, the +Y side end portion of the adhesive 300 can be prevented from reaching the +Z side surface of the +Y side end portion of the plate portion 262. Therefore, joining defect, such as welding defect, between the -Z side end portion of the third plate 230 and the +Z side surface of the +Y side end portion of the plate portion 262 caused by the presence of at least a part of the adhesive 300 on the +Z side surface of the +Y side end portion of the plate portion 262 can be avoided. Similarly to the +Y side elastic material 400, the -Y side elastic material 400 is at least partially positioned between the +Z side surface of the -Y side end portion of the plate portion 262 and the -Y side end portion of the adhesive 300. Therefore, joining defect between the -Z side end portion of the fourth plate 240 and the +Z side surface of the -Y side end portion of the plate portion 262 caused by the presence of at least a part of the adhesive 300 on the +Z side surface of the - Y side end portion of the plate portion 262 can be avoided.

As shown in FIG. 2, the -Y side elastic material 400 is at least partially positioned between the -Z side surface of the -Y side battery cell 110 and the +Z side surface of the plate portion 262. Therefore, the -Y side elastic material 400 is compressed in the Z direction by the -Z side surface of the -Y side battery cell 110 and the +Z side surface of the plate portion 262. Therefore, a stress in the Z direction is generated in the -Y side elastic material 400. In the embodiment, the stress of the -Y side elastic material 400 in the Z direction is equal to or greater than the pressure exerted by the uncured resin to the -Y side elastic material 400, and is preferably greater than the pressure exerted by the uncured resin to the -Y side elastic material 400. Therefore, the -Y side end portion of the uncured resin can be less likely to protrude to the -Y side from the gap between the -Z side surface of the -Y side battery cell 110 and the +Z side surface of the - Y side elastic material 400 as compared with when the stress of the -Y side elastic material 400 in the Z direction is less than the pressure exerted by the uncured resin to the -Y side elastic material 400. However, the stress of the -Y side elastic material 400 in the Z direction may be less than the pressure exerted by the uncured resin to the -Y side elastic material 400. The same applies to a relationship between the stress of the +Y side elastic material 400 in the Z direction and the pressure exerted by the uncured resin to the +Y side elastic material 400.

The stress of the -Y side elastic material 400 in the Z direction can be adjusted by the compression ratio of the -Y side elastic material 400 in the Z direction. Therefore, the stress of the -Y side elastic material 400 in the Z direction can be determined according to a relationship between a thickness of the -Y side elastic material 400 in the Z direction in a non-compressed state and a dimension of a gap between the - Z side surface of the -Y side battery cell 110 and the +Z side surface of the plate portion 262 in the Z direction. The same applies to the stress of the +Y side elastic material 400 in the Z direction. The pressure exerted by the uncured resin to the - Y side elastic material 400 can be adjusted by a material of the uncured resin. The pressure exerted by the uncured resin to the -Y side elastic material 400 may be constant regardless of the compression ratio of the uncured resin in the Z direction. The same applies to the pressure exerted by the uncured resin to the +Y side elastic material 400.

A method of generating the stress in the Z direction in the elastic material 400 is not limited to the method according to the embodiment. For example, the elastic material 400 may be compressed in the Z direction by a member different from the battery cell 110 and the +Z side surface of the plate portion 262. In this example as well, the stress in the Z direction can be generated in the elastic material 400.

In the embodiment, each elastic material 400 has a structure that dams the adhesive 300. In addition, each elastic material 400 is at least partially positioned between the -Z side surface of the stack of the battery cells 110 and the +Z side surface of the plate portion 262. Therefore, the elastic material 400 can be disposed in a smaller space inside the housing 200 as compared with when each elastic material 400 is offset from the stack of the battery cells 110 as viewed in the Z direction. In addition, when the structure is the elastic material 400, damage to the battery cell 110 due to the contact between the battery cell 110 and the structure can be reduced as compared with when the structure is a relatively hard material such as a metal block or a resin block. In particular, when the elastic material 400 is a porous material such as a sponge, the damage to the battery cell 110 due to the contact between the battery cell 110 and the elastic material 400 can be further reduced as compared with when the elastic material 400 is a solid material such as rubber. However, the elastic material 400 may be offset from the stack of the battery cells 110 as viewed in the Z direction. The structure that dams the adhesive 300 may be a relatively hard material such as a metal block or a resin block, instead of or in addition to the elastic material 400.

In the example shown in FIG. 2, a substantially half portion of the -Y side of the -Z side surface of the -Y side battery cell 110 and the +Z side surface of the -Y side elastic material 400 are in contact with each other, except for in the X direction both end portions of the -Y side elastic material 400. As a result, the -Z side surface of the -Y side battery cell 110 is partially in contact with the -Y side elastic material 400 and is partially in contact with the adhesive 300. Therefore, the heat generated from the -Y side battery cell 110 can be easily dissipated to the plate portion 262 through the adhesive 300 as compared with when the -Z side surface of the -Y side battery cell 110 is in contact with only the elastic material 400 without being in contact with the adhesive 300. However, the -Z side surface of the -Y side battery cell 110 may be in contact with only the elastic material 400 without being in contact with the adhesive 300. Even if the -Z side surface of the -Y side battery cell 110 is not in contact with the adhesive 300, the heat generated from the -Y side battery cell 110 can be dissipated from the fourth plate 240. The same applies to the - Z side surface of the +Y side battery cell 110.

In the example shown in FIG. 2, the +X side end portion of the -Y side elastic material 400 protrudes to the +X side from the +X side end portion of the -Z side surface of the -Y side battery cell 110. As a result, the adhesive 300 can be prevented from protruding to the +X side region with respect to the -Z side surface of the -Y side battery cell 110 as compared with when the +X side end portion of the -Y side elastic material 400 is offset to the -X side with respect to the +X side end portion of the -Z side surface of the -Y side battery cell 110. The -X side end portion of the -Y side elastic material 400 also protrudes to the -X side from the -X side end portion of the -Z side surface of the -Y side battery cell 110. As a result, the adhesive 300 can be prevented from protruding to the -X side region with respect to the -Z side surface of the -Y side battery cell 110 as compared with when the -X side end portion of the -Y side elastic material 400 is offset to the +X side with respect to the -X side end portion of the -Z side surface of the -Y side battery cell 110. The same applies to the +Y side elastic material 400.

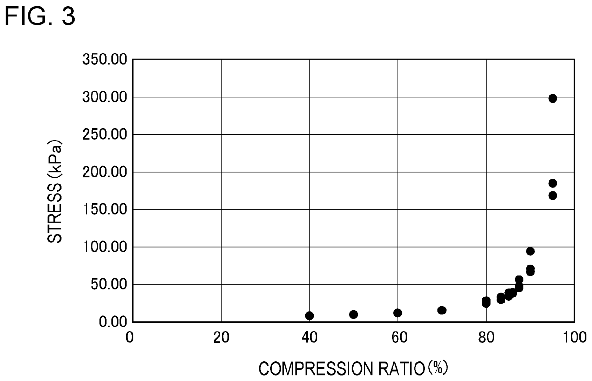

FIG. 3 is a graph showing a relationship between a compression ratio of the elastic material 400 and a stress of the elastic material 400. In the graph shown in FIG. 3, the horizontal axis indicates a compression ratio (unit: %) of the elastic material 400 in the Z direction, and the vertical axis indicates a stress (unit: kPa) of the elastic material 400 in the Z direction. The compression ratio of the elastic material 400 in the Z direction is a ratio of a thickness of the elastic material 400 in the Z direction in a compressed state to a thickness of the elastic material 400 in the Z direction in a non-compressed state. The non-compressed state is a state in which the elastic material 400 is disposed on the +Z side surface side of the plate portion 262 and the +Z side surface of the elastic material 400 is not pressed. The stress of the elastic material 400 in the Z direction is a stress of the elastic material 400 in the compressed state in the Z direction. In the example shown in FIG. 3, the elastic material 400 is a sponge having a void.

As shown in FIG. 3, the stress of the elastic material 400 in the Z direction increases relatively gradually with an increase in the compression ratio of the elastic material 400 in the Z direction in a range of 40% to 80% and increases relatively abruptly with an increase in the compression ratio of the elastic material 400 in the Z direction in a range of 80% or more. It is estimated that the reason why the stress of the elastic material 400 in the Z direction increases relatively gradually with an increase in the compression ratio of the elastic material 400 in the Z direction in a range of 40% to 80% is that, in the range of 40% to 80% of the compression ratio of the elastic material 400 in the Z direction, a hollow portion inside the elastic material 400, that is, the void is mainly crushed and the compression of the elastic material 400 in the Z direction does not contribute much to the increase in the stress of the elastic material 400. It is estimated that the reason why the stress of the elastic material 400 in the Z direction increases relatively abruptly with an increase in the compression ratio of the elastic material 400 in the Z direction in a range of 80% or more is that the solid portion inside the elastic material 400 is crushed in the range of 80% or more of the compression ratio of the elastic material 400 in the Z direction.

The pressure exerted by the uncured adhesive to the elastic material 400 is about 50 kPa regardless of the compression of the uncured adhesive in the Z direction. Therefore, the stress of the elastic material 400 in the Z direction can be equal to or greater than the pressure exerted by the uncured adhesive to the elastic material 400 in a range of about 90% or more of the compression ratio of the elastic material 400 in the Z direction. Therefore, in the embodiment, the thickness of the elastic material 400 in the Z direction in the non-compressed state and the dimension of the gap between the -Z side surface of the battery cell 110 and the +Z side surface of the plate portion 262 in the Z direction can be determined such that the compression ratio of the elastic material 400 in the Z direction is 90% or more.

Hereinabove, the embodiments of the present invention have been described with reference to the drawings. However, the embodiment is merely an example of the present invention, and various configurations other than the above-described configurations can also be adopted.

In the embodiment, the structure having the pair of first extending portions 264 and the pair of elastic materials 400 dams the adhesive 300 that is at least partially positioned between the -Z side surface of the stack of the battery cells 110 and the +Z side surface of the sixth plate 260. However, the same structure as the structure described using the embodiment can also be used to dam another adhesive that is at least partially positioned between the battery cell 110 and the housing 200. For example, the adhesive may be at least partially positioned between the +Z side surface of the stack of the battery cell 110 and the -Z side surface of the fifth plate 250. The same structure as the structure described using the embodiment may be at least partially positioned around the adhesive. In this example, the structure dams the adhesive that is at least partially positioned between the +Z side surface of the stack of the battery cell 110 and the -Z side surface of the fifth plate 250.

This application claims priority based on Japanese Patent Application No. 2023-141440 filed on August 31, 2023, and the disclosure of which is incorporated herein in its entirety by reference.

### REFERENCE SIGNS LIST

100 battery module, 110 battery cell, 112 exterior material, 114 positive electrode tab, 116 negative electrode tab, 118 tab group, 120 compression pad, 130 first voltage detection device, 131 first protector, 131a first opening, 132 first voltage detection terminal, 133 first voltage detection line, 134 first connector, 135 first bus bar, 140 second voltage detection device, 141 second protector, 141a second opening, 142 second voltage detection terminal, 143 second voltage detection line, 144 second connector, 145 second bus bar, 200 housing, 210 first plate, 220 second plate, 230 third plate, 240 fourth plate, 250 fifth plate, 260 sixth plate, 262 plate portion, 264 first extending portion, 266 second extending portion, 300 adhesive, 400 elastic material

## Claims

1. A battery module comprising:
a battery cell;
a housing that accommodates the battery cell;
an adhesive that is at least partially positioned between the battery cell and the housing; and
a structure that dams at least a part of the adhesive.

2. The battery module according to Claim 1, wherein the structure includes an elastic material.

3. The battery module according to Claim 2, wherein the elastic material is at least partially positioned between the battery cell and the housing.

4. The battery module according to Claim 2 or 3, wherein when the elastic material is compressed, a stress of the elastic material is equal to or greater than a pressure exerted by the adhesive before curing to the elastic material.

5. The battery module according to any one of Claims 1 to 4,
wherein predetermined portions of the housing are joined to each other, and
the structure is at least partially positioned between the predetermined portions and the adhesive.

6. The battery module according to any one of Claims 1 to 5, wherein the adhesive has thermal conductivity.
